# EUROPÄISCHE PATENTSCHRIFT

(11) **EP 1 639 961 B1**
(45) Veröffentlichungstag und Bekanntmachung des Hinweises auf die Patenterteilung: **06.05.2009**
(21) Anmeldenummer: 05012535.0
(22) Anmeldetag: 10.06.2005
(51) Int. Cl.: A61C 8/00, A61C 7/00

(54) **Chirurgische Verankerungsvorrichtung**
Surgical anchoring device
Dispositif d'ancrage chirurgical

(30) Priorität: 24.09.2004 DE 102004046414
(43) Veröffentlichungstag der Anmeldung: 29.03.2006
(73) Patentinhaber: Stryker Leibinger GmbH & Co. KG, 79111 Freiburg (DE)
(72) Erfinder: Knöpfle, Christian, 78166 Donaueschingen (DE)
(74) Vertreter: Röthinger, Rainer

(56) Entgegenhaltungen:
- DE-U1- 20 310 648
- US-A1- 2004 147 931
- PATENT ABSTRACTS OF JAPAN Bd. 2003, Nr. 12, 5. Dezember 2003 (2003-12-05) -& JP 2004 057729 A (PLATON JAPAN:KK), 26. Februar 2004 (2004-02-26)

## Beschreibung

### Gebiet der Erfindung

Die Erfindung betrifft eine Vorrichtung zum Verankern eines chirurgischen Zugelements im Mundbereich. Derartige Verankerungsvorrichtungen werden häufig für orthodontische Zwecke eingesetzt.

### Hintergrund der Erfindung

Ziel orthodontischer Eingriffe ist es, Zahnfehlstellungen zu behandeln. Oftmals erfolgt das Behandeln der Zahnfehlstellungen dadurch, dass auf die zu behandelnden Zähne Zug- oder Druckkräfte ausgeübt werden. Zu diesem Zweck wird an einem zu behandelnden Zahn ein erstes Ende eines chirurgischen Elements zum Ausüben einer Zug- oder Druckkraft (im Folgenden der Einfachheit halber als Zugelement bezeichnet) befestigt. Das andere Ende des Zugelements wurde in der Vergangenheit häufig an einem anderen Zahn fixiert. Nachteilig ist hierbei jedoch, dass dieser andere Zahn aufgrund der auf ihn wirkenden Gegenkraft ebenfalls allmählich seine Position ändert. Dies ist in den meisten Fällen unerwünscht.

Aus diesem Grund wurden Verankerungsvorrichtungen entwickelt, um das freie Ende eines an einem zu behandelnden Zahn befestigten Zugelements nicht an einem anderen Zahn befestigen zu müssen. Derartige Verankerungsvorrichtungen umfassen in der Regel eine in oder auf einem Knochen festlegbare Festlege-Einrichtung sowie eine mit der Festlege-Einrichtung gekoppelte Halte-Einrichtung für das Zugelement.

Eine solche Verankerungsvorrichtung ist beispielsweise aus der WO 02/02023 A bekannt. Die bekannte Verankerungsvorrichtung besitzt eine Festlege-Einrichtung in Form einer linearen Knochenplatte, die mittels geeigneter Knochenschrauben auf einem Kieferknochen befestigt wird. Die Knochenplatte ist mit einer hakenartigen Halte-Einrichtung für ein Zugelement verbunden.

Eine weitere Verankerungsvorrichtung ist in der WO 02/091941 A beschrieben. Die dortige Verankerungsvorrichtung umfasst ebenfalls eine Festlege-Einrichtung in Form einer Knochenplatte sowie eine (mittels eines L-förmigen Zwischenstücks) mit der Knochenplatte verbundene Halte-Einrichtung. Die Halte-Einrichtung besitzt einen kugelförmigen Kopf, der von zwei senkrecht zueinander verlaufenden Durchgangsöffnungen durchsetzt wird. Die Durchgangsöffnungen fungieren als Aufnahmebereich für ein beispielsweise drahtförmiges Zugelement. Mittels einer senkrecht zu den Durchgangsöffnungen verlaufenden Klemmschraube kann eine das Zugelement in den Durchgangsöffnungen fixierende Klemmkraft erzeugt werden.

Eine aus der EP 0 823 244 A bekannte Verankerungsvorrichtung besitzt eine Festlege-Einrichtung in Form eines Zapfens oder einer Schraube, die unmittelbar in einem Knochen befestigt werden kann. Als Halte-Einrichtung für das Zugelement ist ein Haken vorgesehen, der mittels eines Arms beabstandet von der Festlege-Einrichtung gehalten wird.

In der US 6,575,742 B ist eine weitere Verankerungsvorrichtung mit einer als Knochenschraube ausgebildeten Festlege-Einrichtung beschrieben. Diese Verankerungsvorrichtung umfasst einen kolinear zur Knochenschraube verlaufenden Schraubenkopf mit einer Halte-Einrichtung für das Zugelement. Die Halte-Einrichtung ist als eine den Schraubenkopf senkrecht zum Schraubenschaft durchsetzende Durchgangsöffnung ausgebildet. Ferner besitzt der Schraubenkopf eine umlaufende Vertiefung zum Befestigen eines Zugelements in Form einer Drahtschlinge oder eines Gummibandes.

Die US 2004/147931 A1 beschreibt eine chirurgische Verankerungsvorrichtung zur Verwendung bei orthodontischen Eingriffen. Die Verankerungsvorrichtung weist im Wesentlichen eine Festlege-Einrichtung sowie eine mit dieser Festlege-Einrichtung gekoppelte Klemmeinrichtung auf. Die Klemmeinrichtung ist zur Ausübung der Klemmfunktion mit einer ein Gewinde aufweisende Bohrung versehen. Mit diesem Gewinde wirkt eine Schraube zur Erzeugung der Klemmfunktion zusammen.

Die DE 203 10 648 U1 beschreibt einen im Knochen zu verankernden Korrigiernagel, der einen mittels einer Gewindeverbindung verbindbaren Kopf aufweist. In der zwischen Kopf und Körper vorgesehenen Führung wird ein Federelement angebracht, über das eine Kraft auf die zu korrigierenden Zähne übertragen wird.

In der JP 2004 057729 A ist ein orthodontisches Implantat beschrieben, dessen Grundkörper im Kieferknochenbereich verankerbar ist. In diesen Grundkörper ist ein Ankerkopf einführbar. Der Ankerkopf weist drei Bohrungen mit jeweils einem Innengewinde auf, in die Schrauben mit einer Kegelförmigen Stirnfläche eingedreht werden. Die bezüglich des Ankerkopfes zentrierte Schraube verbindet diesen mit dem Grundkörper.

Der Erfindung liegt die Aufgabe zu Grunde, eine einfach handhabbare Vorrichtung zum Verankern eines chirurgischen Zugelements im Mundbereich anzugeben.

### Kurzer Abriss der Erfindung

Diese Aufgabe wird gelöst durch eine Vorrichtung zum Verankern eines chirurgischen ersten Zugelements im Mundbereich, umfassend eine in oder auf einem Knochen festlegbare Festlege-Einrichtung sowie eine mit der Festlege-Einrichtung gekoppelte Klemmeinrichtung mit wenigstens einem Aufnahmebereich für das erste Zugelement und mit einer relativ zum Aufnahmebereich drehbaren oder mit einem Drehelement zusammenwirkenden schrägen ersten Oberfläche, so dass durch eine Relativdrehung zwischen der schrägen ersten Oberfläche und dem Aufnahmebereich oder dem Drehelement eine das erste Zugelement fixierende Klemmkraft erzeugbar ist. Die erste Oberfläche ist im Bereich einer Stirnfläche mit einer im Wesentlichen ringförmigen, zylindrischen oder hohlzylindrischen Struktur ausgebildet. Bei der Stirnfläche muss es sich nicht notwendigerweise um eine Endfläche der Struktur handeln. Vielmehr kann die Stirnfläche beispielsweise auch im Bereich einer Öffnung des Mantels einer hohlzylindrischen Struktur ausgebildet sein. Gemäß der Erfindung erstreckt sich die schräge erste Oberfläche in Umfangsrichtung der Struktur über höchstens ungefähr 360° oder höchstens ungefähr 270° der Stirnfläche. Die Vorrichtung ist dadurch gekennzeichnet, dass die erste Oberfläche eine in Umfangsrichtung verlaufende Steigung aufweist.

Die schräge erste Oberfläche kann mittelbar (z.B. über ein relativ zur schrägen Oberfläche bewegliches Element) oder unmittelbar mit dem zu fixierenden Zugelement zusammenwirken.

Die Klemmeinrichtung kann ein relativ zum Aufnahmebereich drehbares Drehelement besitzen, an dem die erste Oberfläche ausgebildet ist. Das Drehelement weist zweckmäßigerweise eine geeignete Struktur auf (z.B. einen Innen- oder Außenmehrkant, Schlitz oder Kreuzschlitz, usw.), die das Einleiten eines Drehmoments in das Drehelement erleichtert.

Die Klemmeinrichtung kann zusätzlich zur schrägen ersten Oberfläche eine schräg zur ersten Oberfläche verlaufende zweite Oberfläche besitzen, die mit der schrägen ersten Oberfläche zusammenwirkt. Das Zusammenwirken kann derart erfolgen, dass bei einer Relativdrehung der beiden Oberflächen ein die Klemmkraft bewirkender Vorschub erzeugt werden kann. Dieser Vorschub kann sich auf die Struktur beziehen, an der die erste Oberfläche oder die zweite Oberfläche ausgebildet ist. Ist beispielsweise die zweite Oberfläche drehfest bezüglich des Aufnahmebereichs gelagert, kann durch eine Drehung der Struktur, an welcher die erste Oberfläche ausgebildet ist, ein axialer Vorschub der mit der zweiten Oberfläche versehenen Struktur entlang der Drehachse erzielt werden (oder umgekehrt).

Die Klemmeinrichtung kann ein separates Klemmelement umfassen, an dem die schräge zweite Oberfläche ausgebildet ist. Das Klemmelement kann eine im Wesentlichen ringförmige, zylindrische oder hohlzylindrische Gestalt aufweisen, und die zweite Oberfläche kann an einer Stirnfläche des Klemmelements ausgebildet sein. Zweckmäßigerweise ist das Klemmelement funktional zwischen der ersten Oberfläche und dem Aufnahmebereich angeordnet und wirkt mittelbar oder unmittelbar mit dem zu fixierenden Zugelement zusammen.

Die erfindungsgemäße Verankerungsvorrichtung kann ferner einen (z.B. von der Festlege-Einrichtung oder einem Zwischenstück) auf Abstand zum Knochen gehaltenen Kopf umfassen, an dem die Klemmeinrichtung ausgebildet ist. Gemäß einer ersten Variante handelt es sich bei dem Kopf um einen unmittelbaren (z.B. geradlinigen) Fortsatz der Festlege-Einrichtung. Gemäß einer zweiten Variante ist der Kopf mittels eines Zwischenstücks mit der Festlege-Einrichtung gekoppelt. Das Zwischenstück kann gebogen sein.

Der Kopf kann eine im Wesentlichen parallel zum Knochen verlaufende (z.B. kreisringförmige) Durchmessererweiterung aufweisen, die zum Aufnahmebereich für das zu fixierende Zugelement gehört. Ferner kann im Bereich des Kopfes wenigstens eine Nut ausgebildet sein, die im Wesentlichen in einer zum Knochen parallelen Ebene verläuft. Die Nut kann in Umfangsrichtung des Kopfes verlaufen oder senkrecht hierzu. Sie kann zum Einhängen des ersten oder eines zweiten Zugelements herangezogen werden. Zweckmäßigerweise bildet die Nut wenigstens einen Teil des Aufnahmebereichs.

Der Aufnahmebereich kann eine oder mehrere, den Kopf durchsetzende Öffnungen zum Ein- und/oder Durchführen des ersten Zugelements umfassen. Die eine oder mehreren Öffnungen können in einer zum Knochen im Wesentlichen parallelen Ebene oder schräg hierzu verlaufen.

Was die Ausgestaltung der Festlege-Einrichtung anbelangt, stehen unterschiedliche Möglichkeiten zur Verfügung. Gemäß einer ersten Variante umfasst die Festlege-Einrichtung eine Knochenplatte mit wenigstens einer Durchgangsöffnung für ein Befestigungselement. Der mit der Klemmeinrichtung versehene Kopf der Verankerungsvorrichtung kann sich senkrecht zur Knochenplatte erstrecken. Zu diesem Zweck kann zwischen dem Kopf und der Knochenplatte ein im Wesentlichen L-förmig gebogenes Zwischenstück vorgesehen werden. Die Knochenplatte kann eine T-, Y-, I- oder V-förmige oder eine hiervon abweichende Gestalt besitzen.

Gemäß einer zweiten Variante umfasst die Festlege-Einrichtung ein in einen Knochen einschraubbares Knochengewinde ähnlich der eingangs genannten US 6,575,742 B. Das Knochengewinde kann kolinear mit der Drehachse der Relativdrehung (zwischen dem Aufnahmebereich und der schrägen ersten Oberfläche) zum Erzeugen der Klemmkraft verlaufen.

Gemäß einem weiteren Aspekt der Erfindung wird ein Verankerungssystem für ein chirurgisches Zugelement zur Verfügung gestellt. Das Verankerungssystem umfasst zusätzlich zu der Verankerungsvorrichtung das erste Zugelement und, optional, ein zweites Zugelement. Bei dem ersten Zugelement kann es sich um einen Draht handeln, und das zweite Zugelement kann ein elastisches Band oder ein elastischer Ring sein.

Eine bevorzugte Verwendung der erfindungsgemäßen Vorrichtung sowie des erfindungsgemäßen Systems ist das Gebiet der Orthodontik. Alternative Verwendungen (auch außerhalb des Mundbereichs) sind möglich.

### Beschreibung der Zeichnungen

Weitere Einzelheiten und Vorteile der Erfindung ergeben sich aus der nachfolgenden Beschreibung zweier Ausführungsbeispiele sowie aus den Figuren. Es zeigt:
- Fig. 1: ein erstes Ausführungsbeispiel einer erfindungsgemäßen Verankerungsvorrichtung in einer Explosionsdarstellung;
- Fig. 2: eine perspektivische Ansicht eines Kopf-Grundkörpers und eines Zwischenstücks der Verankerungsvorrichtung gemäß Fig. 1;
- Fig. 3: eine Aufsicht auf den Grundkörper gemäß Fig. 2 in einer teilweisen Schnittdarstellung;
- Fig. 4: eine Seitenansicht eines Drehelements der Verankerungsvorrichtung gemäß Fig. 1;
- Fig. 5: eine Schnittdarstellung des Drehelements gemäß Fig. 4;
- Fig. 6: eine perspektivische Ansicht eines Klemmelements der Verankerungsvorrichtung gemäß Fig. 1;
- Fig. 7: eine Seitenansicht des Klemmelements gemäß Fig. 6;
- Fig. 8: eine Ansicht des Klemmelements gemäß Fig. 6 von unten;
- Fig. 9: einen Verblockungsbolzen der Verankerungsvorrichtung gemäß Fig. 1;
- Fig. 10: eine Seitenansicht der fertig montierten Verankerungsvorrichtung gemäß dem ersten Ausführungsbeispiel in teilweiser Schnittansicht;
- Fig. 11: eine perspektivische Ansicht einer Verankerungsvorrichtung gemäß einem zweiten Ausführungsbeispiel der Erfindung mit aufgenommenem Zugelement;
- Fig. 12: eine Seitenansicht eines Kopfes der Verankerungsvorrichtung gemäß Fig. 11;
- Fig. 13: eine perspektivische Ansicht eines Drehelements der Verankerungsvorrichtung gemäß Fig. 11;
- Fig. 14: eine perspektivische Ansicht eines Kopf-Grundkörpers der Verankerungsvorrichtung gemäß Fig. 11; und
- Fig.15: eine perspektivische Ansicht der als Knochenplatte ausgebildeten Festlege-Einrichtung der Verankerungsvorrichtung gemäß Fig. 11.

### Beschreibung bevorzugter Ausführungsbeispiele

Im Nachfolgenden wird die Erfindung anhand zweier Ausführungsbeispiele näher erläutert. Einander entsprechende Elemente wurden mit übereinstimmenden Bezugszeichen versehen.

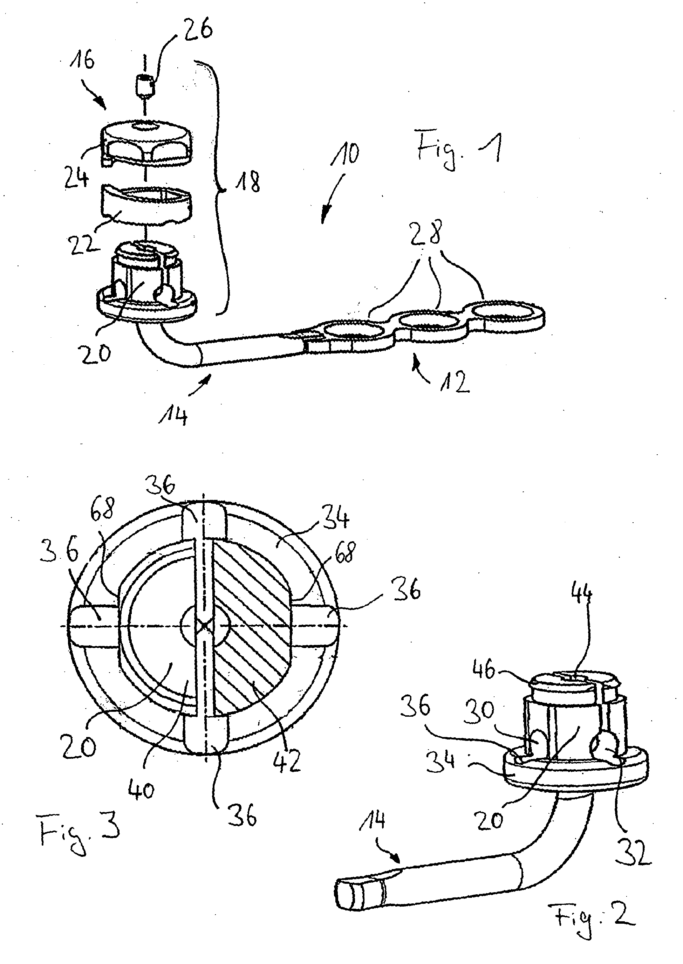

Fig. 1 zeigt ein erstes Ausführungsbeispiel einer erfindungsgemäßen Verankerungsvorrichtung 10 in einer Explosionsdarstellung. Die Verankerungsvorrichtung 10 umfasst eine auf einem Knochen festlegbare Festlege-Einrichtung in Form einer Knochenplatte 12 sowie einen über ein L-förmiges Zwischenstück 14 mit der Knochenplatte 12 gekoppelten Kopf 16. Am Kopf 16 ist eine aus mehreren Komponenten bestehende Klemmeinrichtung 18 ausgebildet. Genauer gesagt umfasst die Klemmeinrichtung 18 eine Mehrzahl von Aufnahmebereichen für Zugelemente (in Fig. 1 ohne Bezugszeichen), die an einem Grundkörper 20 des Kopfes 16 ausgebildet sind, ein Klemmelement 22, ein als Kappe ausgebildetes Drehelement 24 sowie einen Verblockungsbolzen 26. Der Aufbau dieser Komponenten sowie ihre Funktionsweise wird unten näher erläutert.

Wie sich aus Fig. 1 ergibt, besitzt die Knochenplatte 12 eine lineare (I-förmige) Gestalt mit drei hintereinander angeordneten Durchgangsöffnungen 28. Jede dieser Durchgangsöffnungen 28 dient zur Aufnahme einer Knochenschraube (nicht dargestellt), um die Knochenplatte 12 auf einem Knochen festzulegen. Abweichend von der in Fig. 1 dargestellten Ausführung könnten die Durchgangsöffnungen 28 der Knochenplatte 12 eine beliebige andere Anordnung (z.B. L-, T- oder Y-förmig) besitzen. Es hat sich als zweckmäßig herausgestellt, bei einer als Knochenplatte 12 ausgebildeten Festlege-Einrichtung wenigstens drei Durchgangsöffnungen vorzusehen, um die Verankerungsvorrichtung (mittels mindestens zwei, besser mindestens drei Befestigungsschrauben) auf einem Knochen festlegen zu können. Die Knochenplatte 12 besitzt eine Länge von typischerweise ungefähr 8 bis ungefähr 20 mm. Die zur Befestigung der Knochenplatte 12 auf einem Knochen herangezogenen Knochenschrauben weisen typischerweise einen Gewindedurchmesser im Bereich zwischen ungefähr 1,5 und ungefähr 2,5 mm sowie einen Kopfdurchmesser von typischerweise ungefähr 2,7 bis ungefähr 5 mm auf.

Fig. 2 zeigt eine perspektivische Ansicht des Grundkörpers 20 des Kopfes 16 sowie des als L-förmiger Steg ausgebildeten Zwischenstücks 14. Der Grundkörper 20 und das Zwischenstück 14 sind aus einem einzigen Drehteil gefertigt. Die Länge des Zwischenstücks 14 liegt im Bereich zwischen ungefähr 5 und ungefähr 15 mm. Aufgrund seiner L-Form hält das Zwischenstück 14 den Grundkörper 20 und daher auch den Kopf 16 der Verankerungsvorrichtung 10 auf einem Abstand zwischen ungefähr 2 und 7 mm zum Knochen. Bei der Montage der Verankerungsvorrichtung 10 wird das freie Ende des Zwischenstücks 14 mit der Knochenplatte 12 verschweißt.

Gemäß Fig. 2 umfasst der Grundkörper 20 eine Mehrzahl von Aufnahmebereichen für das an der Verankerungsvorrichtung 10 zu fixierende Zugelement. Diese Aufnahmebereiche umfassen zwei senkrecht zueinander verlaufende und den Grundkörper 20 in einer zur Knochenplatte 12 parallelen Ebene durchsetzende Öffnungen 30, 32. Ferner besitzt der im Wesentlichen zylindrische Grundkörper 20 eine scheibenförmige Durchmessererweiterung 34, welche ebenfalls als Aufnahmebereich fungiert. Wie sich am besten aus Fig. 3 ergibt, die eine Aufsicht auf den Grundkörper 20 zeigt, sind in der Durchmessererweiterung 34 (in der Verlängerung der Öffnungen 30, 32) insgesamt vier nutförmige Vertiefungen 36 ausgebildet. Diese nutförmigen Vertiefungen 36 erstrecken sich, wie die Durchmessererweiterung 34, im Wesentlichen parallel zum Knochen und zur Knochenplatte 12. Sie fungieren ebenfalls als Aufnahmebereiche für ein fixierendes Zugelement.

Der Durchmesser der Durchmessererweiterung 34 ist derart gewählt, dass die Durchmessererweiterung 34 bei vollständig montierter Klemmeinrichtung 18 radial über die weiteren Komponenten der Klemmeinrichtung 18 (insbesondere über das Klemmelement 22 und das Drehelement 24) übersteht, d.h. dass die nutförmigen Vertiefungen 36 für den Chirurgen bei einer Betrachtung des Kopfes 16 von oben noch einsehbar sind. Diese Einsehbarkeit der nutförmigen Vertiefungen 36, welche ja die Verlängerungen der Öffnungen 30, 32 darstellen, erleichtert dem auf die Verankerungsvorrichtung 10 blickenden Chirurgen das Auffinden der Öffnungen 30, 32 zum Einführen eines Zugelements.

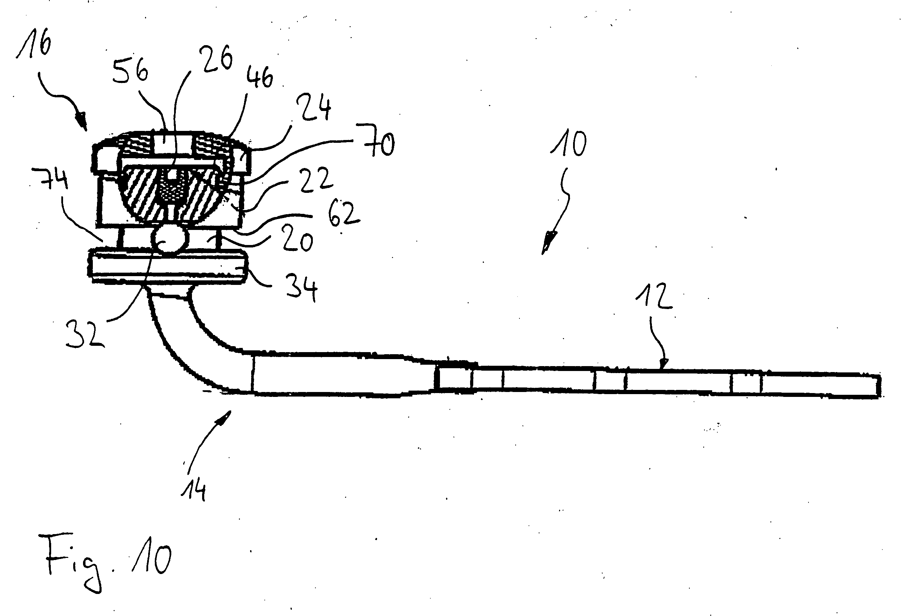

Der Grundkörper 20 ist in zwei Hälften 40, 42 aufspalten und besitzt eine axiale Öffnung 44 zum Einführen des Verblockungsbolzens 26. Ferner umfasst der Grundkörper 20 an seinem in Fig. 2 oberen Ende eine umlaufende Lippe 46. Diese Lippe 46 befindet sich in montiertem Zustand der Klemmeinrichtung 18, d.h. bei in die Öffnung 44 eingeführtem Verblockungsbolzen 26, in Eingriff mit einer komplementären Struktur auf der Innenseite des Drehelements 24. Auf diese Weise wird das Drehelement 24 (und damit auch das Klemmelement 22) unverlierbar mit dem Grundkörper 20 verbunden. Einzelheiten hierzu werden weiter unten unter Bezugnahme auf Fig. 10 erläutert.

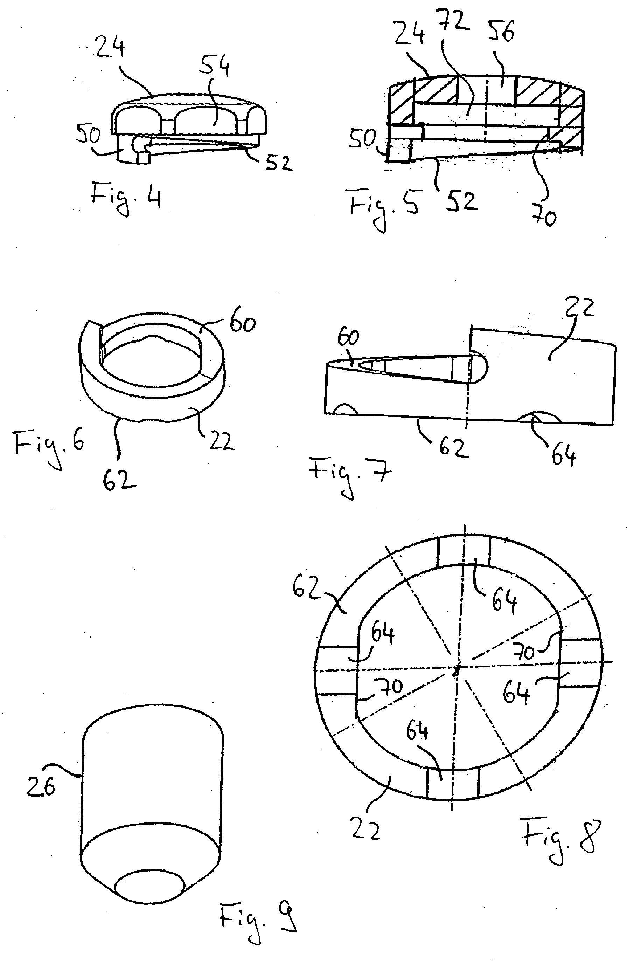

Fig. 4 zeigt eine Seitenansicht und Fig. 5 eine Schnittansicht des Drehelements 24. Das Drehelement 24 ist als Kappe ausgebildet und besitzt an seinem in den Fign. 4 und 5 unteren Ende eine im Wesentlichen hohlzylindrische Struktur 50. Die hohlzylindrische Struktur 50 weist an ihrer freien Stirnseite eine schräg verlaufende Oberfläche 52 auf. Die schräg verlaufende Oberfläche 52 erstreckt sich über ungefähr 360° der Stirnseite der hohlzylindrischen Struktur 50 und hat einen helixartigen Verlauf (ohne dass es sich dabei aber um ein Gewinde handeln würde).

Wie sich aus Fig. 4 ergibt, besitzt das Drehelement 24 einen Außenmehrkant 54, damit ein Drehmoment in das Drehelement 24 eingeleitet werden kann. Ferner umfasst das Drehelement 24 eine sich entlang seiner Längsachse erstreckende Öffnung 56. Diese Öffnung 56 gestattet ein Durchführen des Verblockungsbolzens 26.

Die Fign. 6 bis 8 zeigen verschiedene Ansichten des Klemmelements 22. Das Klemmelement 22 besitzt einen ringförmigen oder hohlzylindrischen Aufbau. An seiner im montierten Zustand dem Drehelement 24 zugewandten Stirnseite ist das Klemmelement 22 mit einer schrägen Oberfläche 60 versehen, während die Gegenüberliegende Stirnseite 62 im Wesentlichen eben verläuft. Die Begriffe "schräg" und "eben" beziehen sich im vorliegenden Ausführungsbeispiel auf die Ausrichtung des Aufnahmebereichs bzw. des aufgenommenen Zugelements.

In der ebenen Stirnseite 62 des Klemmelements 22 sind entlang zweier senkrecht zueinander verlaufenden Geraden vier Ausfräsungen 64 vorhanden. Die radiale Position dieser Ausfräsungen 64 stimmt in montiertem Zustand der Klemmeinrichtung 18 mit der Position der nutförmigen Vertiefungen 36 der Durchmessererweiterung 34 des Grundkörpers 20 überein. Mit anderen Worten, die Ausfräsungen 64 bilden in montiertem Zustand ebenfalls eine Verlängerung der den Grundkörper 20 durchsetzenden Öffnungen 30, 32. Um eine korrekte Positionierung der Ausfräsungen 64 bezüglich der nutförmigen Vertiefungen 36 und der Öffnungen 30, 32 zu gewährleisten, ist das Klemmelement 22 in einer definierten Ausrichtung formschlüssig auf den Grundkörper 20 aufsteckbar. Zur Erzielung des Formschlusses besitzen das Klemmelement 22 und der Grundkörper 20 auf jeweils zwei gegenüberliegenden Seiten komplementäre Abflachungen 68 (Fig. 3) und 70 (Fig. 8). Der Formschluss bewirkt gleichzeitig, dass das Klemmelement 22 (und damit dessen schräge Oberfläche 60) drehfest bezüglich des Grundkörpers 20 (und damit auch bezüglich der einzelnen Aufnahmebereiche) gelagert ist. Eine axiale Verschiebung des Klemmelements 22 entlang der Längsachse des Grundkörpers 20 und entlang einer Drehachse des Drehelements 24 ist trotzdem noch möglich. Die Bedeutung dieses Sachverhalts wird weiter unten bei einer Beschreibung der Funktionsweise der Verankerungsvorrichtung 10 gemäß dem ersten Ausführungsbeispiel näher erläutert.

Fig. 9 zeigt eine perspektivische Ansicht des Verblockungsbolzens 26, welcher bei der Montage der Klemmeinrichtung 18 zum Einsatz gelangt. Wie in Fig. 1 dargestellt, wird zur Montage der Klemmeinrichtung 18 zunächst das Klemmelement 22 derart formschlüssig auf den Grundkörper 20 aufgesetzt, dass dessen schräge Oberfläche 60 von der Durchmessererweiterung 34 des Grundkörpers 20 weg zeigt. Die formschlüssige Verbindung zwischen dem Grundkörper 20 und dem Klemmelement 22 ist derart ausgebildet, dass das Klemmelement 22 zwar drehfest, aber in axialer Richtung verschieblich auf dem Grundkörper 20 gelagert ist. In einem nächsten Schritt wird das Drehelement 24 auf den Grundkörper 20 aufgesetzt. Das Klemmelement 22 ist damit zwischen der Durchmessererweiterung 34 des Grundkörpers 20 und dem Drehelement 24 angeordnet.

Das Aufsetzen des Drehelements 24 auf den Grundkörper 20 erfolgt derart, dass die umlaufende Lippe 46 des Grundkörpers 20 in einem Raum 72 angeordnet ist, der durch die mit der Öffnung 56 versehene Oberseite des Drehelements 24 sowie durch eine innerhalb des hohlzylindrischen Drehelements 24 umlaufende Lippe 70 begrenzt ist (Fig. 5). Anschließend wird das Drehelement 24 in eine solche Drehstellung bezüglich des Klemmelements 22 gebracht, dass die dem Klemmelement 22 zugewandte Stirnseite des Drehelements 24 vollflächig auf der dem Drehelement 24 zugewandten Stirnseite des Klemmelements 22 aufliegt. Dies ist gemäß dem vorliegenden Ausführungsbeispiel möglich, da die Neigung (bzw. Steigung) der schrägen Oberfläche 52 des Drehelements 24 mit der Neigung (bzw. Steigung) der schrägen Oberfläche 60 des Klemmelements 22 übereinstimmt.

Damit das Klemmelement 22 nicht unbeabsichtigt in Richtung auf die Durchmessererweiterung 34 des Grundkörpers 20 rutscht (und damit die Öffnungen 30, 32 verschließt), ist das Klemmelement 22 mittels eines leichten Presssitzes mit dem Grundkörper 20 verbunden. Mit anderen Worten, es muss erst (mittels des Drehelements 24) eine gewisse Kraft in axialer Richtung auf das Klemmelement 22 ausgeübt werden, damit dieses sich (unter Überwindung des Presssitzes) zur Fixierung des Zugelements in Richtung auf die Durchmessererweiterung 34 des Grundkörpers 20 bewegen lässt.

Zur unverlierbaren Kopplung des Drehelements 24 und damit auch des Klemmelements 22 mit dem Grundkörper 22 muss in einem letzten Schritt der Verblockungsbolzen 26 durch die Öffnung 56 auf der Oberseite des Drehelements 24 hindurch in die axiale Öffnung 54 des Grundkörpers 20 eingeführt werden. In Folge des Einführens des Verblockungsbolzens 26 werden die beiden Hälften 40, 42 des Grundkörpers 20 und der daran jeweils ausgebildete Teil der umlaufenden Lippe 46 voneinander weg bewegt. Aufgrund dieser Bewegung der umlaufenden Lippe 46 radial nach außen hintergreift die Lippe 46 am Grundkörper 20 die umlaufende Lippe 70 innerhalb des Drehelements 24, wodurch der Grundkörper 20 und das Drehelement 24 unverlierbar miteinander verbunden werden. Dieser Sachverhalt ist in Fig. 10 in einer teilweisen Schnittdarstellung zu erkennen. Fig. 10 zeigt das Verankerungsimplantat 10 im werksseitig montierten Auslieferungszustand.

Die Funktionsweise des Verankerungsimplantats 10 gemäß dem ersten Ausführungsbeispiel ist wie folgt. In einem ersten Schritt wird das Verankerungsimplantat 10 auf einem Knochen im Mundbereich festgelegt. Zu diesem Zweck wird das Verankerungsimplantat 10 in geeigneter Weise positioniert und anschließend mittels vorzugsweise zwei oder drei Knochenschrauben am Knochen befestigt. Anschließend wird ein Zugelement wie beispielsweise ein Draht durch eine der beiden Öffnungen 30, 32 des Grundkörpers 20 hindurch geführt.

Zum Fixieren des durch eine der Öffnungen 30, 32 hindurch geführten Zugelements wird mittels eines geeigneten Werkzeugs das Drehelement 24 im Ausführungsbeispiel im Uhrzeigersinn gedreht. Eine Drehung des Drehelements 24 im Uhrzeigersinn bewirkt, dass die schräge Oberfläche 52 des Drehelements 24 auf der gegenüberliegenden schrägen Oberfläche 60 des Klemmelements abläuft. Da das Klemmelement 22 drehfest gelagert ist, kann es sich nicht mit dem Drehelement 24 mitdrehen, sondern wird aufgrund des Zusammenwirkens der beiden schrägen Oberflächen 52 und 60 in axialer Richtung auf die Durchmessererweiterung 34 zu bewegt. Das Klemmelement 22 erfährt also eine Vorschub auf das in einer der Öffnungen 30, 32 angeordnete Zugelement. Aufgrund dieses Vorschubs gelangt das Klemmelement 22 (bzw. dessen Ausfräsungen 64) schließlich in Kontakt mit dem zu fixierenden Zugelement. Ein Weiterdrehen des Drehelements 24 nach erfolgtem Kontakt zwischen Klemmelement 22 und Zugelement bewirkt ein das Zugelement bezüglich der Verankerungsvorrichtung 10 fixierendes Verklemmen des Zugelements.

Das Zugelement kann anschließend z.B. mit einem Zahn oder mit einem an einem Zahn befestigten Halteelement verbunden werden. Je nach der zum Einsatz gelangenden orthodontischen Vorhergehensweise wäre es auch möglich, das Zugelement in einem ersten Schritt mittelbar oder unmittelbar mit dem zu behandelnden Zahn zu koppeln und es erst in einem zweiten Schritt an der Verankerungsvorrichtung 10 zu befestigen.

Gemäß einer alternativen Verwendungsweise kann ein schlingenförmig gebogenes oder bandförmiges Befestigungselement in die in Fig. 10 dargestellte Nut 74 zwischen der Durchmessererweiterung 34 des Grundkörpers 20 und der planaren Stirnseite 62 des Klemmelements 22 eingehängt werden. Zum Verklemmen des Zugelements zwischen der Durchmessererweiterung 34 und der planaren Oberfläche 62 wird dann in einem nächsten Schritt das Drehelement 24 wie oben erläutert betätigt. In die umlaufende Nut 74 des Kopfes 16 kann ein schlingen- oder bandförmiges Zugelement für orthodontische Zwecke auch eingehängt werden, ohne dass das Drehelement 24 betätigt werden muss, d.h. ohne dass ein Verklemmen des Zugelements zwischen dem Klemmelement 22 und der Durchmessererweiterung 34 erfolgt.

Für den Fachmann ist ersichtlich, dass die unter Bezugnahme auf die Fign. 1 bis 10 erläuterte Verankerungsvorrichtung 10 bei nur geringfügigen Abwandlungen auch noch dann funktionieren würde, wenn lediglich eine Schrägfläche vorhanden wäre. So könnte gemäß einer ersten Variante das Klemmelement 22 vollständig weggelassen werden und der hohlzylindrische Abschnitt 50 des Drehelements 24 in Richtung auf die Durchmessererweiterung 34 des Grundkörpers 20 hin verlängert werden. Bei einem Drehen des Drehelements 24 würde dann das Drehelement 24 (oder besser gesagt dessen schräge Oberfläche 52) unmittelbar mit einem Abschnitt des zu verklemmenden Zugelements zusammenwirken.

Gemäß einer zweiten Variante könnte das Klemmelement 22 beibehalten werden, aber anstatt der hohlzylindrischen Struktur 50 des Drehelements 24 lediglich ein Zahn oder mehrere Zähne vorgesehen werden, welche bei einer Betätigung des Drehelements 24 auf der schrägen Oberfläche 60 des Klemmelements 22 ablaufen. Falls mehrere solche Zähne vorgesehen werden, könnten diese eine in Umfangsrichtung des Drehelements 24 veränderliche Höhe aufweisen (wobei als "Umhüllende" der Zähne sich wiederum eine mit der hohlzylindrischen Struktur 50 vergleichbare abgeschrägte Struktur ergeben könnte).

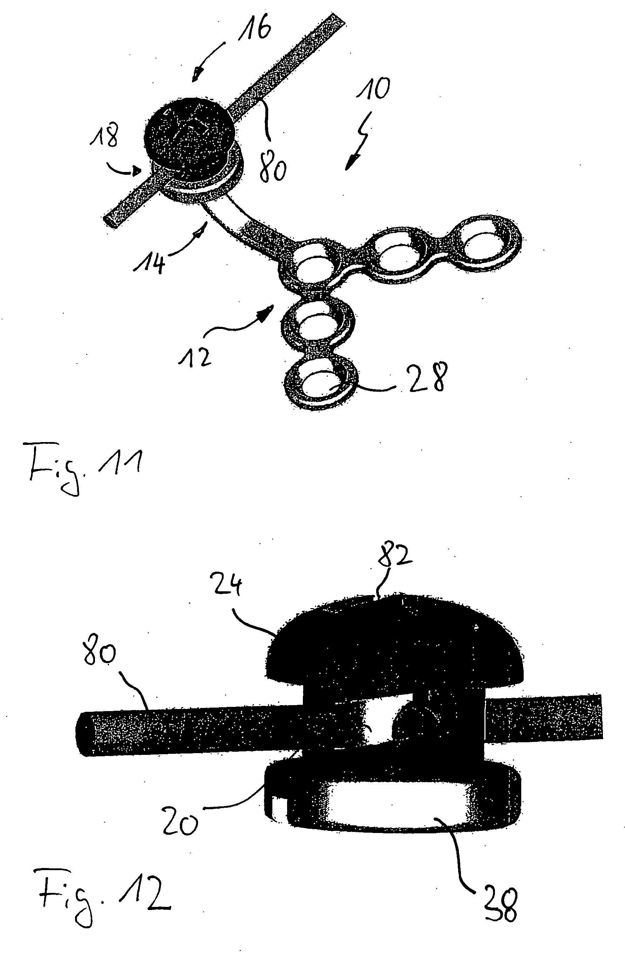

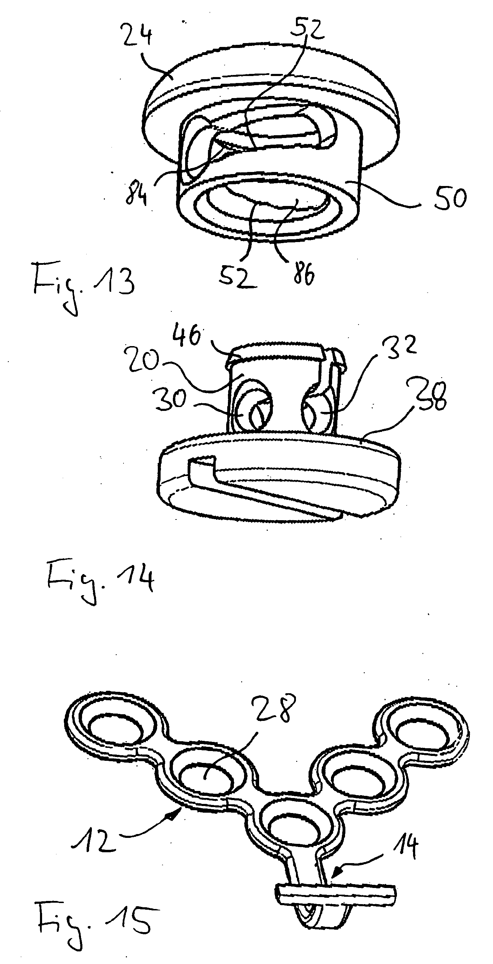

In den Fign. 11 bis 15 ist ein zweites Ausführungsbeispiel einer erfindungsgemäßen Verankerungsvorrichtung 10 dargestellt. Die Verankerungsvorrichtung 10 gemäß dem zweiten Ausführungsbeispiel weist viele Gemeinsamkeiten mit der Verankerungsvorrichtung gemäß dem ersten Ausführungsbeispiel auf. So ist als Festlege-Einrichtung wiederum eine Knochenplatte 12 vorgesehen, die jedoch eine V-förmige Gestalt aufweist. Mit anderen Worten, die insgesamt fünf Durchgangsöffnungen 28 der Knochenplatte 12 sind V-förmig angeordnet. Dieser Sachverhalt ist in den Fign. 11 und 15 dargestellt.

Die Knochenplatte 12 ist mittels eines stegförmigen Zwischenstücks 14 mit einem Kopf 16 verbunden, an dem wiederum eine Klemmeinrichtung 18 ausgebildet ist. Die Klemmeinrichtung 18 dient dazu, ein drahtförmiges Zugelement 80 am Kopf 16 der Verankerungsvorrichtung 10 zu befestigen.

Die Klemmeinrichtung 18 umfasst in einem Grundkörper 20 des Kopfes 16 ausgebildete Öffnungen 30, 32 zur Aufnahme des Zugelements 80 sowie eine schräge Oberfläche 52, die im Bereich eines Drehelements 24 ausgebildet ist. Das Drehelement 24 ist auf seiner Oberseite mit einer Kreuzschlitzstruktur 82 versehen. Mittels der Kreuzschlitzstruktur 82 kann ein Drehmoment in das Drehelement 24 zum Verklemmen des Zugelements 80 eingeleitet werden. Während der mit dem L-förmig gebogenen Zwischenstück 14 gekoppelte Grundkörper 20 im Wesentlichen den selben Aufbau und dieselbe Funktionsweise wie der Grundkörper der Verankerungsvorrichtung gemäß dem ersten Ausführungsbeispiel aufweist, unterscheidet sich das Drehelement 24 sowohl strukturell als auch funktionell von dem Drehelement des ersten Ausführungsbeispiels.

Wie sich aus Fig. 13 ergibt, umfasst das Drehelement 24 eine hohlzylindrische Struktur 50, in deren Mantel auf zwei gegenüberliegenden Seiten je eine Öffnung 84, 86 ausgebildet ist. Jede der beiden Öffnungen 84, 86 besitzt die Gestalt eines (helixartig) schräg verlaufenden Schlitzes oder Langlochs. Von den inneren unteren Stirnflächen dieser Öffnungen 84, 86 werden schräg verlaufende Oberflächen 52 gebildet, welche eine klemmende Fixierung des in eine der Öffnungen 30, 32 eingeführten Zugelements 80 gestatten.

Zur Montage der Verankerungsvorrichtung 10 gemäß dem zweiten Ausführungsbeispiel wird in einem ersten Schritt der Grundkörper 20 mit dem L-förmig gebogenen Zwischenstück 14 (welches einstückig mit der Knochenplatte 12 ausgebildet ist) verschweißt. Anschließend wird das Drehelement 24 auf den Grundkörper 20 aufgesteckt. Beim Aufstecken hintergreift eine in Umfangsrichtung verlaufende Lippe 46 des Grundkörpers 20 innerhalb des Drehelements 24 angeordnete Lippen (nicht dargestellt) in ähnlicher Weise wie beim ersten Ausführungsbeispiel beschrieben. Es bildet sich eine Rastverbindung aus.

Zum Befestigen des Zugelements 80 an der Verankerungsvorrichtung 10 gemäß dem zweiten Ausführungsbeispiel wird in einem ersten Schritt das Drehelement 24 derart bezüglich der Öffnungen 30, 32 im Grundkörper 20 ausgerichtet, dass das Zugelement 80 ungehindert durch eine der Öffnungen 30, 32 hindurch geführt werden kann. Dieser Sachverhalt ist in Fig. 12 dargestellt. Anschließend wird mittels eines Kreuzschlitz-Schraubendrehers ein Drehmoment im Uhrzeigersinn in das Drehelement 24 eingeleitet. Dieses Drehmoment bewirkt, dass die schrägen Oberflächen 52 sich jeweils nach Art eines Keils auf gegenüberliegenden Seiten der entsprechenden Öffnung 30, 32 zwischen das innerhalb der Öffnung 30, 32 fixierte Zugelement 80 einerseits und eine Durchmessererweiterung 38 des Grundkörpers 20 andererseits schiebt. Das Zugelement 80 wird hierdurch zwischen einer (in Fig. 12 oberen) Begrenzung der jeweiligen Öffnung 30, 32 einerseits und der schrägen Oberfläche 52 des Drehelements 24 andererseits klemmend fixiert.

Die unter Bezugnahme auf die vorhergehenden Ausführungsbeispiele beschriebenen erfindungsgemäßen Verankerungsvorrichtungen gestatten eine zuverlässige Fixierung von Zugelementen an der Verankerungsvorrichtung. Das Vorsehen wenigstens einer schrägen Oberfläche in Kombination mit einem Drehmechanismus gestattet ein einfaches und dennoch zuverlässiges Fixieren des Zugelements. Im Vergleich zu herkömmlichen Techniken, wie der Verwendung einer Klemmschraube, besitzt der erfindungsgemäße Ansatz den Vorteil, dass zum Aktivieren der Klemmverbindung eine nur geringfügige Drehbewegung von häufig weniger als 90° erforderlich ist. Dies verkürzt die Dauer des kieferchirurgischen Eingriffs.

Obwohl die Erfindung anhand verschiedener Ausführungsbeispiele erläutert wurde, sind unzählige Modifikationen oder Abänderungen und Ergänzungen denkbar. Die Erfindung ist daher einzig durch den Schutzbereich der nachfolgenden Ansprüche beschränkt.

## Patentansprüche

1. Vorrichtung (10) zum Verankern eines chirurgischen ersten Zugelements (80) im Mundbereich, umfassend
- eine in oder auf einem Knochen festlegbare Festlege-Einrichtung (12); und
- eine mit der Festlege-Einrichtung (12) gekoppelte Klemmeinrichtung (18) mit wenigstens einem Aufnahmebereich (30; 32; 36; 74) für das erste Zugelement (80) und mit einer relativ zum Aufnahmebereich (30; 32, 36; 74) drehbaren oder mit einem Drehelement (24) zusammenwirkenden schrägen ersten Oberfläche (52; 60) zum Erzeugen einer das erste Zugelement (80) fixierenden Klemmkraft bei einer Relativdrehung zwischen der schrägen ersten Oberfläche (52; 60) und dem Aufnahmebereich (30; 32; 36) oder dem Drehelement (24), wobei
die erste Oberfläche (52; 60) im Bereich einer Stirnfläche einer im Wesentlichen ringförmigen, zylindrischen oder hohlzylindrischen Struktur (24; 22) ausgebildet ist, wobei sich die erste Oberfläche (52; 60) in Umfangsrichtung der Struktur (24; 22) über höchstens ungefähr 360° der Stirnfläche erstreckt **dadurch gekennzeichnet, dass**, die erste Oberfläche (52; 60) eine in Umfangsrichtung verlaufende Steigung aufweist.

2. Vorrichtung nach Anspruch 1, **dadurch gekennzeichnet, dass** die Klemmeinrichtung (18) ein relativ zum Aufnahmebereich (30; 32; 36; 74) drehbares Drehelement (24) besitzt, an dem die erste Oberfläche (52) ausgebildet ist.

3. Vorrichtung nach Anspruch 1 oder 2, **dadurch gekennzeichnet, dass** die Klemmeinrichtung (18) eine schräg zur ersten Oberfläche (52) verlaufende und mit der ersten Oberfläche (52) zusammenwirkende zweite Oberfläche (60) besitzt, wobei die erste und die zweite Oberfläche (52; 60) zur Erzeugung eines die Klemmkraft bewirkenden Vorschubs relativ zueinander drehbar sind.

4. Vorrichtung nach Anspruch 3, **dadurch gekennzeichnet, dass** die zweite Oberfläche (60) drehfest bezüglich des Aufnahmebereichs (30; 32; 36; 74) gelagert list.

5. Vorrichtung nach Anspruch 3 oder 4, **dadurch gekennzeichnet, dass** die Klemmeinrichtung ein Klemmelement (22) umfasst, an dem die zweite Oberfläche (60) ausgebildet ist.

6. Vorrichtung nach Anspruch 5, **dadurch gekennzeichnet, dass** das Klemmelement (22) zwischen der ersten Oberfläche (52) und dem Aufnahmebereich (30; 32; 36; 74) angeordnet ist.

7. Vorrichtung nach Anspruch 5 oder 6, **dadurch gekennzeichnet, dass** das Klemmelement (22) eine im Wesentlichen ringförmige, zylindrische oder hohlzylindrische Gestalt aufweist.

8. Vorrichtung nach einem vorhergehenden Ansprüche, ferner umfassend einen von der Festlege-Einrichtung (12) auf Abstand zum Knochen gehaltenen Kopf (16), an dem die Klemmeinrichtung (18) ausgebildet ist.

9. Vorrichtung nach Anspruch 8, **dadurch gekennzeichnet, dass** der Kopf (16) eine im Wesentlichen parallel zum Knochen verlaufende Durchmessererweiterung (34) aufweist, die zum Aufnahmebereich (30; 32; 36; 74) gehört.

10. Vorrichtung nach Anspruch 8 oder 9, **dadurch gekennzeichnet, dass** der Kopf (18) wenigstens eine Nut (36; 74) aufweist, die im Wesentlichen in einer zum Knochen parallelen Ebene verläuft.

11. Vorrichtung nach Anspruch 10, **dadurch gekennzeichnet, dass** die Nut (74) in Umfangsrichtung des Kopfes zum Einhängen des ersten oder eines zweiten Zugelements (80) verläuft.

12. Vorrichtung nach Anspruch 10 oder 11, **dadurch gekennzeichnet, dass** der Aufnahmebereich die wenigstens eine Nut (36; 74) umfasst.

13. Vorrichtung nach einem der Ansprüche 8 bis 11 **dadurch gekennzeichnet, dass** der Aufnahmebereich wenigstens eine, den Kopf durchsetzenden Öffnung (30; 32) zum Ein- und/oder Durchführen des ersten Zugelements (80) umfasst.

14. Vorrichtung nach einem der vorhergehenden Ansprüche, **dadurch gekennzeichnet, dass** die Festlege-Einrichtung eine Knochenplatte (12) mit wenigstens einer Durchgangsöffnung (28) für ein Befestigungselement umfasst.

15. Vorrichtung nach Anspruch 14, **dadurch gekennzeichnet, dass** sich der Kopf (16) im Wesentlichen senkrecht zur Knochenplatte (12) erstreckt.

16. Vorrichtung nach Anspruch 14 oder 15, **dadurch gekennzeichnet, dass** die Knochenplatte (12) eine T-, Y- oder I-förmige Gestalt besitzt.

17. Vorrichtung nach einem der Ansprüche 1 bis 16, **dadurch gekennzeichnet, dass** die Festlege-Einrichtung ein Knochengewinde umfasst.

18. Vorrichtung nach Anspruch 17, **dadurch gekennzeichnet, dass** das Knochengewinde kolinear mit der Drehachse der Relativdrehung zwischen dem Aufnahmebereich und der schrägen ersten Oberfläche verläuft.

19. System umfassend eine Vorrichtung (10) nach einem der Ansprüche 1 bis 18 und das erste Zugelement (80).

20. System nach Anspruch 19, **dadurch gekennzeichnet, dass** das erste Zugelement ein Draht ist (80).

21. System nach Anspruch 19 oder 20, **dadurch gekennzeichnet, dass** das zweite Zugelement ein elastisches Band oder ein elastischer Ring ist.

## Claims

1. A device (10) for anchoring a first surgical traction element (80) in the mouth region, comprising
- a fixing device (12), which can be fixed in or to a bone; and
- a clamping device (18), coupled to the fixing device 12), with at least one locating region (30; 32; 36; 74) for the first traction element (80) and with an oblique first surface (52; 60) which is rotatable relative to the locating region (30; 32; 36; 74) or configured to co-operate with a rotary element (24) for producing a clamping force which fixes the first traction element (80) upon a relative rotation taking place between the oblique first surface (52; 60) and one of the locating region (30; 32; 36) and the rotary element (24), wherein the first surface (52; 60) is formed in a region of a front face of a structure (24; 22) which is one of substantially annular, cylindrical and hollow cylindrical, wherein the first surface (52; 60) extends in the circumferential direction of the structure (24; 22) over at most approximately 360° of the front face, **characterized in that** the first surface (52; 60) comprises a slope that extends in a circumferential direction.

2. The device according to claim 1, **characterized in that** the clamping device (18) has a rotary element (24) which is rotatable relative to the locating region (30; 32; 36; 74) and at which the first surface (52) is formed.

3. The device according to claim 1 or 2, **characterized in that** the clamping device (18) has a second surface (60) which extends obliquely to the first surface (52) and co-operates with the first surface (52), wherein the first and the second surfaces (52; 60) are rotatable relative to one another to produce an advance movement giving rise to the clamping force.

4. The device according to claim 3, **characterized in that** the second surface (60) is supported so as to be non-rotatable relative to the locating region (30; 32; 36; 74).

5. The device according to claim 3 or 4, **characterized in that** the clamping device (18) comprises a clamping element (22) at which the second surface (60) is formed.

6. The device according to claim 5, **characterized in that** the clamping element (22) is disposed between the first surface (52) and the locating region (30; 32; 36; 74).

7. The device according to claim 5 or 6, **characterized in that** the clamping element (22) has a form which is one of substantially annular, cylindrical and hollow cylindrical.

8. The device according to any of the foregoing claims, further comprising a head (16) which is retained by the fixing device (12) at a spacing from the bone and at which the clamping device (18) is formed.

9. The device according to claim 8, **characterized in that** the head (16) has a diametrical widening (34) extending substantially parallel to the bone and belonging to the locating region (30; 32; 36; 74).

10. The device according to claim 8 or 9, **characterized in that** the head (18) has at least one groove (36; 74) which extends substantially in a plane parallel to the bone.

11. The device according to claim 10, **characterized in that** the groove (74) extends in the circumferential direction of the head for suspending at least one of the first and a second traction elements (80).

12. The device according to claim 10 or 11, **characterized in that** the locating region comprises the at least one groove (36; 74).

13. The device according to any of claims 8 to 11, **characterized in that** the locating region comprises at least one opening (30; 32) passing through the head for at least one of introducing and passing through the first traction element (80).

14. The device according to any of the foregoing claims, **characterized in that** the fixing device comprises a bone plate (12) with at least one through-opening (28) for a fastening element.

15. The device according to claim 14, **characterized in that** the head (16) extends substantially perpendicularly to the bone plate (12).

16. The device according to claim 14 or 15, **characterized in that** the bone plate (12) has one of a T-, Y- and I-shaped form.

17. The device according to any of claims 1 to 16, **characterized in that** the fixing device comprises a bone screw thread.

18. The device according to claim 17, **characterized in that** the bone screw thread extends co-linearly with an axis of rotation of the relative rotation between the locating region and the oblique first surface.

19. A system comprising a device (10) according to any of claims 1 to 18 and the first traction element (80).

20. The system according to claim 19, **characterized in that** the first traction element is a wire (80).

21. The system according to claim 19 or 20, **characterized in that** the second traction element is an elastic band or an elastic ring.

## Revendications

1. Dispositif (10) servant à l'ancrage d'un premier élément de tension chirurgical (80) dans la zone buccale, comprenant
- un dispositif formant fixation (12) pouvant être fixé dans ou sur un os, et
- un dispositif de serrage (18) couplé au dispositif formant fixation (12) et comportant au moins une zone de réception (30, 32, 36, 74) pour le premier élément de tension (80) ainsi qu'une première surface (52, 60) inclinée mobile en rotation par rapport à la zone de réception (30, 32, 36, 74) ou coopérant avec un élément mobile en rotation (24) pour la production d'une force de serrage fixant le premier élément de tension (80) lors d'une rotation relative entre la première surface inclinée (52, 60) et la zone de réception (30, 32, 60) ou l'élément mobile en rotation (24),
la première surface (52, 60) est réalisée dans la partie d'une face frontale sous la forme d'une structure (24, 22) pour l'essentiel annulaire, cylindrique ou cylindrique creuse et s'étendant dans la direction circonférentielle de la structure (24, 22) sur tout au plus environ 360° de la face frontale,
**caractérisé en ce que** la première surface (52, 60) présente une pente ascendante s'étendant dans la direction circonférentielle.

2. Dispositif selon la revendication 1, **caractérisé en ce que** le dispositif de serrage (18) possède un élément mobile en rotation (24) par rapport à la zone de réception (30, 32, 36, 74) sur lequel est formée la première surface (52).

3. Dispositif selon la revendication 1 ou 2, **caractérisé en ce que** l'élément de serrage (18) possède une seconde surface (60) s'étendant de manière inclinée par rapport à la première surface (52) et coopérant avec la première surface (52), la première et la seconde surface (52, 60) étant mobiles en rotation l'une par rapport à l'autre pour produire un avancement générateur de la force de serrage.

4. Dispositif selon la revendication 3, **caractérisé en ce que** la seconde surface (60) est supportée fixe en rotation par rapport à la zone de réception (30, 32, 36, 74).

5. Dispositif selon la revendication 3 ou 4, **caractérisé en ce que** le dispositif de serrage comprend un élément de serrage (22) sur lequel est formée la seconde surface (60).

6. Dispositif selon la revendication 5, **caractérisé en ce que** l'élément de serrage (22) est disposé entre la première surface (52) et la zone de réception (30, 32, 36, 74).

7. Dispositif selon la revendication 5 ou 6, **caractérisé en ce que** l'élément de serrage (22) présente une conformation pour l'essentiel annulaire, cylindre ou cylindrique creuse.

8. Dispositif selon l'une des revendications précédentes, comprenant en outre une tête (16) maintenue par le dispositif formant fixation (12) à distance de l'os, sur laquelle est formé le dispositif de serrage (18).

9. Dispositif selon la revendication 8, **caractérisé en ce que** la tête (16) présente un élargissement de diamètre (34) s'étendant pour l'essentiel parallèlement à l'os et faisant partie intégrante de la zone de réception (30, 32, 36, 74).

10. Dispositif selon la revendication 8 ou 9, **caractérisé en ce que** la tête (18) présente au moins une rainure (36, 74) s'étendant pour l'essentiel selon un plan parallèle par rapport à l'os.

11. Dispositif selon la revendication 10, **caractérisé en ce que** la rainure (74) s'étend dans la direction circonférentielle de la tête pour accrocher le premier ou un deuxième élément de tension (80).

12. Dispositif selon la revendication 10 ou 11, **caractérisé en ce que** la zone de réception comprend au moins ladite rainure (36, 74).

13. Dispositif selon l'une des revendications 8 à 11, **caractérisé en ce que** la zone de réception comprend au moins une ouverture (30, 32) traversant la tête pour l'introduction et/ou le passage du premier élément de tension (80).

14. Dispositif selon l'une des revendications précédentes, **caractérisé en ce que** le dispositif formant fixation comprend une plaque osseuse (12) comportant au moins une ouverture traversante (28) pour un élément de fixation.

15. Dispositif selon la revendication 14, **caractérisé en ce que** la tête (16) s'étend pour l'essentiel perpendiculairement à la plaque osseuse (12).

16. Dispositif selon la revendication 14 ou 15, **caractérisé en ce que** la plaque osseuse (12) se présente en forme d'un T, d'un Y ou d'un I.

17. Dispositif selon l'une des revendications 1 à 16, **caractérisé en ce que** le dispositif formant fixation comprend un filetage osseux.

18. Dispositif selon la revendication 17, **caractérisé en ce que** le filetage osseux s'étend de manière colinéaire à l'axe de rotation de la rotation relative entre la zone de réception et la première surface inclinée.

19. Système comprenant un dispositif (10) selon l'une des revendications 1 à 18, et le premier élément de tension (80).

20. Système selon la revendication 19, **caractérisé en ce que** le premier élément de tension se présente sous la forme d'un fil métallique (80).

21. Système selon la revendication 19 ou 20, **caractérisé en ce que** le deuxième élément de tension se présente sous la forme d'un ruban élastique ou d'un anneau élastique.
